(19) Europäisches Patentamt / European Patent Office / Office européen des brevets

(11) **EP 4 345 977 A1**

(12) **EUROPEAN PATENT APPLICATION**
published in accordance with Art. 153(4) EPC

(43) Date of publication:
**03.04.2024 Bulletin 2024/14**

(21) Application number: **22810171.3**

(22) Date of filing: **28.03.2022**

(51) International Patent Classification (IPC):
*H01M 10/42* (2006.01)    *H01M 10/658* (2014.01)
*H01M 50/51* (2021.01)    *H01M 50/258* (2021.01)
*H01M 50/249* (2021.01)

(52) Cooperative Patent Classification (CPC):
Y02E 60/10

(86) International application number:
**PCT/CN2022/083407**

(87) International publication number:
**WO 2022/247437 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.05.2021 CN 202110593168**

(71) Applicant: SVOLT ENERGY TECHNOLOGY CO., LTD
**Changzhou, Jiangsu 213200 (CN)**

(72) Inventors:
• **LI, Dongjiang**
 **hangzhou, Jiangsu 213200 (CN)**
• **LI, Jian**
 **hangzhou, Jiangsu 213200 (CN)**
• **SHENG, Jie**
 **hangzhou, Jiangsu 213200 (CN)**

(74) Representative: **Groth & Co. KB**
 **P.O. Box 6107**
 **102 32 Stockholm (SE)**

(54) **BATTERY MODULE AND BATTERY PACK**

(57) A battery module and battery pack, the battery module comprises: a first quantity of first cells and a second quantity of second cells, wherein the thermal stability of the first cells is higher than that of the second cells. The first quantity of first cells and the second quantity of second cells are connected in series in a preset arrangement sequence, wherein the arrangement sequence is used to indicate the order of each of the first cells and each of the second cells in the battery module. The first quantity of first cells and the second quantity of second cells connected in series are laid out according to a preset arrangement structure, wherein the arrangement structure is used to indicate the position of each of the first cells and each of the second cells in the battery module.

Fig. 1

EP 4 345 977 A1

**Description**

**CROSS-REFERENCE OF RELATED APPLICATIONS**

The present application claims priority from Chinese patent application No. "202110593168.8", filed by Svolt Energy Technology Co., Ltd. on 28 May 2021 and entitled "Battery Module and Battery Pack".

**TECHNICAL FIELD**

The present application relates to the field of power batteries, and in particular relates to a battery module and a battery pack.

**BACKGROUND**

In recent years, with the continuous promotion and popularization of electric vehicles, battery safety has been paid more and more attention by people. Due to the different thermal stability of the positive electrode materials for cells with different positive electrode systems, the overall safety of the cells are also different. Some battery systems have relatively high thermal stability of the positive electrode, such as LFP (English: $LiFePO_4$, Chinese: lithium iron phosphate), therefore this type of battery system is not prone to fire and combustion, however the energy density of this type of battery system is relatively low, and the endurance of this type of battery system is relatively weak. Some battery systems have relatively high energy density and relatively strong endurance, but the thermal stability of the positive electrode of these battery systems is relatively low, such as NMC (English: $Li(Ni_xMn_yCo_z)O_2$, Chinese: lithium nickel manganese cobalt oxide), is prone to fire and combustion, and when one cell catches fire, the fire will quickly spread to other cells in the battery module, resulting in relatively low safety.

**SUMMARY**

The present application aims to solve, at least to some extent, one of the technical problems in the related art.
For this purpose, it is an objective of the present application to provide a battery module.
According to a first aspect of the embodiments of the present application, there is provided a battery module that comprises: a first quantity of first cells and a second quantity of second cells, wherein, the thermal stability of the first cells is higher than that of the second cells;

the first quantity of first cells and the second quantity of second cells are connected in series according to a preset arrangement sequence, wherein the arrangement sequence is used to indicate the order of each of the first cells and each of the second cells in the battery module; and
the first quantity of first cells and the second quantity of second cells connected in series are laid out according to a preset arrangement structure, wherein the arrangement structure is used to indicate the position of each of the first cells and each of the second cells in the battery module.

Optionally, the area and shape of a first target side of each of the first cells is the same as that of a second target side of each of the second cells;
wherein the first cells and the second cells are connected in series in such a manner that the first target side is opposite to the second target side.
Optionally, the arrangement sequence is that the first cells and the second cells are arranged in an alternate manner;
wherein the arrangement structure includes: a rectilinear structure or a matrix structure.
Optionally, the first cells are lithium iron phosphate (LFP) cells, and the second cells are lithium nickel manganese cobalt oxide (NMC) cells.
Optionally, a first nominal capacity corresponding to the first cells and a second nominal capacity corresponding to the second cells satisfy a preset capacity limitation relationship;
wherein the capacity limitation relationship is determined based on a first decay rate corresponding to the first cells and a second decay rate corresponding to the second cells.
Optionally, the manner in which the capacity limitation relationship is determined comprises:

determining target cells and non-target cells according to the first decay rate corresponding to the first cells and the second decay rate corresponding to the second cells, wherein a decay rate corresponding to the target cells is faster than a decay rate corresponding to the non-target cells;

determining an aging time according to a nominal capacity corresponding to the target cells, a preset aging coefficient and the decay rate corresponding to the target cells;

determining an aged capacity corresponding to the non-target cells according to the aging time and the decay rate corresponding to the non-target cells; and

determining the capacity limitation relationship based on the nominal capacity corresponding to the target cells, a nominal capacity corresponding to the non-target cells, the aged capacity corresponding to the non-target cells and the aging coefficient.

Optionally, the capacity limitation relationship is:

the product of the nominal capacity corresponding to the target cells and the aging coefficient is equal to the difference between the nominal capacity corresponding to the non-target cells and the aged capacity corresponding to the non-target cells.

Optionally, the manner in which the capacity limitation relationship is determined comprises:

determining target cells and non-target cells according to the first decay rate corresponding to the first cells and the second decay rate corresponding to the second cells, wherein a decay rate corresponding to the target cells is faster than a decay rate corresponding to the non-target cells;

determining an aging time according to a nominal capacity corresponding to the target cells, a preset aging coefficient and the decay rate corresponding to the target cells;

determining an aged capacity corresponding to the non-target cells according to the aging time and the decay rate corresponding to the non-target cells; and

determining the capacity limitation relationship based on the nominal capacity corresponding to the target cells, an initial SOC corresponding to the target cells, a nominal capacity corresponding to the non-target cells, the aged capacity corresponding to the non-target cells, an initial SOC corresponding to the non-target cells and the aging coefficient.

Optionally, the capacity limitation relationship is:

$$Q_0 = \frac{(Q_1 - f_1(t_0)) \times \max(\frac{y_0}{x_0}, \frac{1 - y_0}{1 - x_0})}{\sigma}$$

wherein, $Q_0$ is the nominal capacity corresponding to the target cells, $Q_1$ is the nominal capacity corresponding to the non-target cells, $t_0$ is the aging time, $f_1(t_0)$ is the aged capacity corresponding to the non-target cells, $x_0$ is the initial SOC corresponding to the target cells, $y_0$ is the initial SOC corresponding to the non-target cells, and $\sigma$ is the aging coefficient.

Another objective of the present application is to provide a battery pack.

According to a second aspect of the embodiments of the present application, a battery pack is provided, and the battery pack comprises: one or more battery modules described in the first aspect of the embodiments of the present application;

wherein each of the battery modules is connected in series or in parallel.

By means of the above technical solution, the battery module in the present application comprises a first quantity of first cells and a second quantity of second cells, and the first quantity of first cells and the second quantity of second cells are connected in series according to a preset arrangement sequence, wherein the first quantity of first cells and the second quantity of second cells connected in series are laid out according to a preset arrangement structure. Wherein, the thermal stability of the first cells is higher than that of the second cells. In the present application, the first cells and the second cells are connected in series according to the preset arrangement sequence and laid out according to the preset arrangement structure, so that the first cells with higher thermal stability can act as a thermal barrier, which improves the safety of the battery module and reduces unnecessary support structures in the battery module.

Additional aspects and advantages of the present application will be set forth in part in the following description, other parts thereof will become obvious from the following description, or may be learned through implementation of the present application.

## BRIEF DESCRIPTION OF THE DRAWINGS

The accompanying drawings are used to provide a further understanding of the present application and constitute a part of the specification, which are used to explain the present application in conjunction with the following specific embodiments, but do not constitute a limitation to the present application. In the accompanying drawings:

Fig. 1 is a schematic diagram of a battery module in accordance with an embodiment of the present application;
Fig. 2 is a schematic diagram of a prismatic cell in accordance with an embodiment of the present application;
Fig. 3 is a schematic diagram of a cylindrical cell in accordance with an embodiment of the present application;
Fig. 4 is a schematic diagram of a pouch cell in accordance with an embodiment of the present application;
Fig. 5 is a schematic diagram of an arrangement sequence in accordance with an embodiment of the present application;
Fig. 6 is a schematic diagram of another arrangement sequence in accordance with an embodiment of the present application;
Fig. 7 is a schematic diagram of another arrangement sequence in accordance with an embodiment of the present application;
Fig. 8 is a schematic diagram of an arrangement structure in accordance with an embodiment of the present application;
Fig. 9 is a schematic diagram of another arrangement structure in accordance with an embodiment of the present application;
Fig. 10 is a schematic diagram of a battery pack in accordance with an embodiment of the present application.

## DETAILED DESCRIPTION

The embodiments of the present application are described in detail below, and examples of the embodiments are shown in the accompanying drawings, wherein the same or similar reference numerals throughout refer to the same or similar elements or the elements with the same or similar functions. The embodiments described below with reference to the drawings are exemplary and are intended to explain the present application, but are not to be construed as a limitation to the present application.

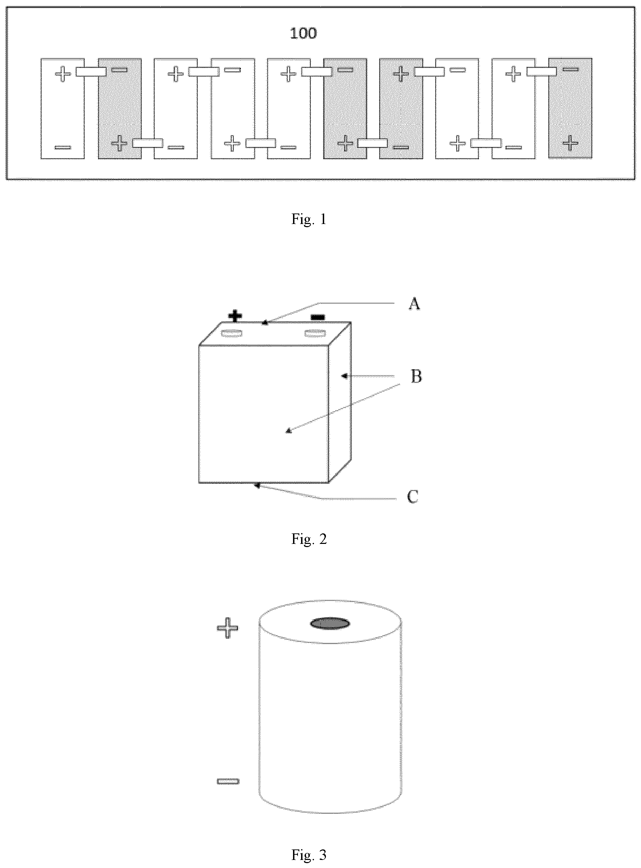

FIG. 1 is a schematic diagram of a battery module 100 according to an exemplary embodiment. As shown in FIG. 1, the battery module comprises: a first quantity of first cells and a second quantity of second cells, wherein the thermal stability of the first cells is higher than that of the second cells.

The first quantity of first cells and the second quantity of second cells are connected in series in a preset arrangement sequence, wherein the arrangement sequence is used to indicate the order of each first cell and each second cell in the battery module.

The first quantity of first cells and the second quantity of second cells connected in series are laid out according to a preset arrangement structure, wherein the arrangement structure is used to indicate the position of each of the first cells and each of the second cells in the battery module.

For example, the required first quantity corresponding to the first cells and the required second quantity corresponding to the second cells are determined firstly, then the arrangement sequence of the first quantity of first cells and the second quantity of second cells are determined, and then the first quantity of first cells and the second quantity of second cells are connected in series according to the arrangement sequence, wherein the first cells may be, for example, LFP cells, and the second cells may be, for example, NMC, LCO (English: $LiCoO_2$ Chinese: lithium cobalt(III) oxide), NCA (English: $LiNi_xCo_yAl_zO_2$, Chinese: Lithium Nickel Cobalt Aluminum Oxide), etc., wherein the arrangement sequence is used to indicate the order of each first cell and each second cell in the battery module, for example, the first cells and the second cells may be arranged in an alternate manner with one or more cells as an interposing unit, as shown in Fig. 1, taking the prismatic cell as an example, the gray cells may be, for example, first cells, and the white cells may be second cells, for example, 4 first cells and 6 second cells are included. In FIG. 1, the quantity of cells (which may be first cells or second cells) interposed between the first cells or interposed between the second cells may be one or multiple, which is not specifically restricted in the present application. Taking the direction from left to right of the figure as an example, the first one of first cell (the second one from left to right) and the second one of first cell (the sixth one from left to right) are separated by three second cells, and the second one of first cell is adjacent to the third one of first cell (the seventh one from left to right) in sequence, and the third one of first cell and the fourth one of first cell (the tenth one from left to right) are separated by two second cells.

Further, the first quantity of first cells and the second quantity of second cells connected in series may be laid out according to a preset arrangement structure, wherein the arrangement structure is used to indicate the position of each of the first cells and each of the second cells in the battery module, for example, the arrangement structure may be a rectilinear structure, a matrix structure, etc. In this way, by connecting the first cells with higher thermal stability and the second cells with lower thermal stability in series, when one cell in the battery module catches fire, any uncontrolled fire can be prevented from happening. Normally, if the battery module only comprises the second cells, then structural members (such as foam, etc.) used for heat insulation are required to be provided to block the spread of fire in the battery module, however, the structural members take up space in the battery module. In this embodiment, the first cells can replace the original structural members used for heat insulation, and play a role in supporting the structural stability of the entire battery module on the premise of ensuring safety, while also reducing the cost of thermal management design.

In conclusion, the battery module in the present application comprises a first quantity of first cells and a second quantity of second cells, the first quantity of first cells and the second quantity of second cells are connected in series according to a preset arrangement sequence, wherein the first quantity of first cells and the second quantity of second cells connected in series are laid out according to a preset arrangement structure. Wherein, the thermal stability of first cells is higher than that of the second cells. In the present application, the first cells and the second cells are connected in series according to the preset arrangement sequence and laid out according to the preset arrangement structure, so that the first cells with higher thermal stability can act as a thermal barrier, which improves the safety of the battery module and reduces unnecessary support structures in the battery module.

In one application scenario, the area and shape of a first target side of each of the first cells is the same as that of a second target side of each of the second cells.

Wherein the first cells and the second cells are connected in series in such a manner that the first target side is opposite to the second target side.

As an example, before connecting first cells and second cells in series, a first target side of each of the first cells and a second target side of each of the second cells first are determined, and then the first target side of each of the first cells is placed opposite to the second target side of a corresponding one of the second cells, and the first cells and the second cells are connected in series. Wherein, the area and shape of the first target side is the same as that of the second target side, and the first cells and the second cells may be prismatic cells, cylindrical cells or pouch cells. Since the area and shape of the first target side is the same as that of the second target side, the space utilization rate of the battery module can be improved after connecting the first cells and the second cells in series in such a manner that the first target side faces the second target side.

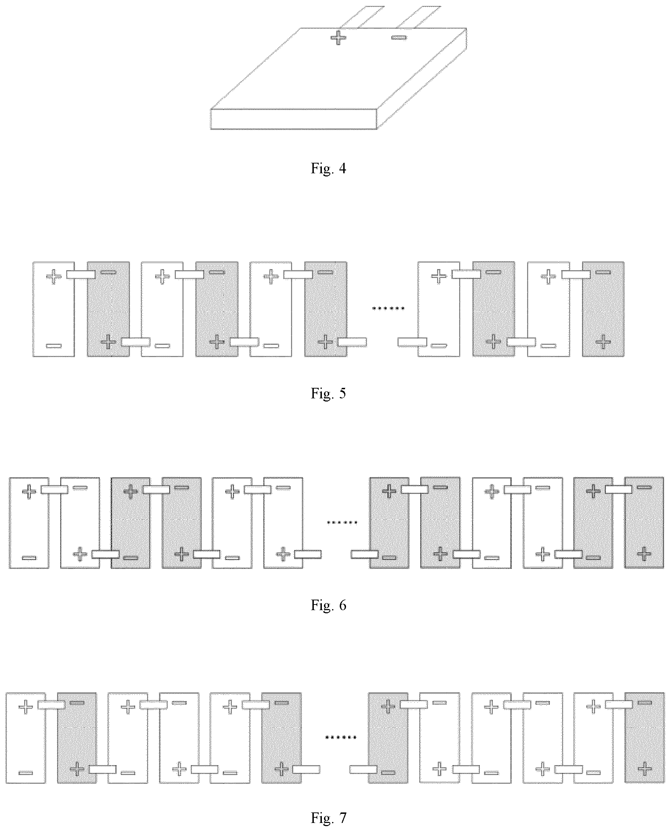

It should be noted that, when the first cells and the second cells are both prismatic cells, as shown in FIG. 2, the first target side and the second target side may be any one selected from the four sides B other than the top surface A and the bottom surface C. When the first cells and the second cells are both cylindrical cells, as shown in FIG. 3, the first target side and the second target side may be the lateral side of the cylindrical cells. When the first cells and the second cells are both pouch cells, as shown in FIG. 4, the first target side and the second target side may be the front or back of the pouch cells.

In another application scenario, the arrangement sequence is that the first cells and the second cells are arranged in an alternate manner.

Wherein the arrangement structure comprises: a rectilinear structure or a matrix structure.

As an example, the arrangement sequence of the first cells and the second cells may be that the first cells and the second cells are arranged in an alternate manner. Specifically, the first cells and the second cells may be arranged in an alternate manner at a ratio of 1:1 as shown in Fig. 5 with one cell as an interposing unit, or the first cells and the second cells may be arranged in an alternate manner at a ratio of 1:1 as shown in Fig. 6 with multiple cells as an interposing unit, or the first cells and the second cells may be arranged in an alternate manner at an arbitrary ratio as shown in Fig. 7 with an arbitrary number of cells as an interposing unit, which is not specifically restricted in the present application.

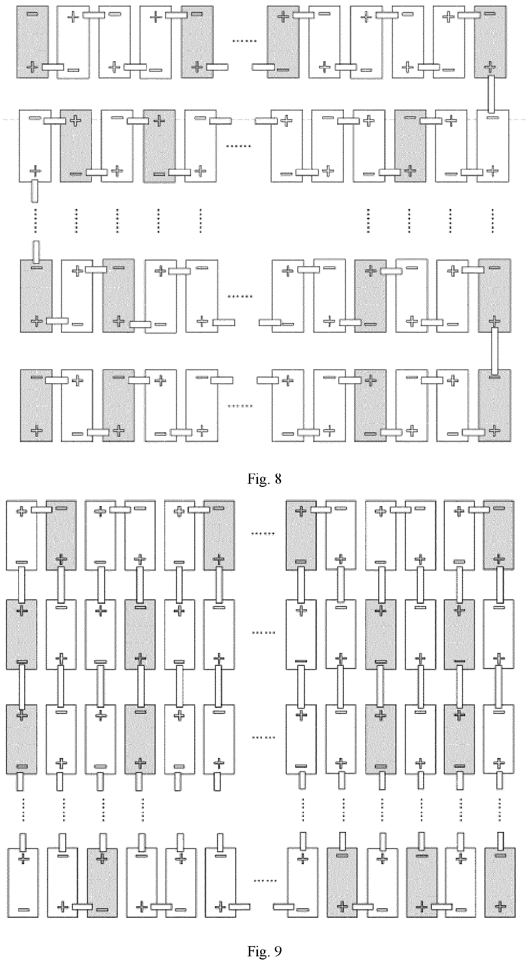

Further, the arrangement structure after the first cells and the second cells are connected in series may be a rectilinear structure, e.g., as shown in Fig. 5, Fig. 6 and Fig. 7, or a matrix structure, for example, as shown in Fig. 8 or Fig. 9, wherein Fig. 8 is a matrix structure arranged in rows, and Fig. 9 is a matrix structure arranged in columns.

In another application scenario, the first cells are LFP cells and the second cells are NMC cells.

As an example, the first cells may be LFP cells with higher thermal stability, and the second cells may be NMC cells with higher energy density. By arranging these two types of cells in an alternate manner, when the NMC cells with lower thermal stability burst into flames, the LFP cells with higher stability can effectively block the spread of fire.

In another application scenario, a first nominal capacity corresponding to the first cells and a second nominal capacity corresponding to the second cells satisfy a preset capacity limitation relationship.

The capacity limitation relationship is determined based on a first decay rate corresponding to the first cells and a second decay rate corresponding to the second cells.

As an example, the nominal capacity of one type selected from the first cells and the second cells is determined firstly, and then, according to the nominal capacity of this type of cells and the decay rate corresponding thereto, the nominal capacity of the other type of cells is determined by using the preset capacity limitation relationship, for example, the first nominal capacity corresponding to the first cells is determined firstly, and then the second nominal capacity corresponding to the second cells is determined. Wherein, the nominal capacity can be understood as the maximum capacity of the cells, and when the first nominal capacity and the second nominal capacity satisfy the capacity limitation relationship, it can be guaranteed that the first cells and the second cells can reach the end of service life at the same time, which improves the utilization rate of cell energy.

In another application scenario, the manner in which the capacity limitation relationship is determined comprises:

determining target cells and non-target cells according to the first decay rate corresponding to first cells and the second decay rate corresponding to second cells, wherein the decay rate corresponding to the target cells is faster than the decay rate corresponding to the non-target cells;

determining an aging time based on a nominal capacity corresponding to the target cells, a preset aging coefficient and the decay rate corresponding to the target cells;

determining an aged capacity corresponding to the non-target cells according to the aging time and the decay rate corresponding to the non-target cells; and

determining the capacity limitation relationship based on the nominal capacity corresponding to the target cells, a nominal capacity corresponding to the non-target cells, the aged capacity corresponding to the non-target cells and the aging coefficient.

As an example, when determining the capacity limitation relationship, between the first decay rate corresponding to first cells and the second decay rate corresponding to second cells, the type of cells corresponding to the larger decay rate can be selected as target cells, and the other type of cells corresponding to the smaller decay rate are selected as non-target cells. Then, the aging time (i.e. the ending time point of service life of the target cells) can be obtained by Formula 1 based on the nominal capacity corresponding to the target cells, a preset aging coefficient, and the decay rate corresponding to the target cells:

$$\sigma Q_0 = Q_0 - f_0(t_0) \ \text{(Fomula 1)}$$

Wherein, $Q_0$ is the nominal capacity corresponding to the target cells, $t_0$ is the aging time, $f_0(t_0)$ is the capacity decay value corresponding to the target cells at $t_0$, i.e., the aged capacity corresponding to the target cells, $f_0$ is a decay function of the target cells, $\sigma$ is the aging coefficient corresponding to the target cells, and the product of the aging coefficient and the nominal capacity corresponding to the target cells $\sigma Q_0$ can be understood as the corresponding capacity when the target cells reach the aging time.

Further, in order to ensure that the aging time of the target cells is the same as that of the non-target cells and that the remaining capacity corresponding to the target cells is equal to that of the non-target cells when reaching the aging time, the aging time can be substituted into the relationship function of the decay rate corresponding to the non-target cells in relation to time, so as to obtain the aged capacity corresponding to the non-target cells, i.e., the capacity decay value of the cells at the end of its service life (i.e., at the aging time). Then, the capacity limitation relationship can be obtained based on the nominal capacity corresponding to the target cells, a nominal capacity corresponding to the non-target cells, the aged capacity corresponding to the non-target cells and the aging coefficient, as shown in Formula 2, so that the nominal capacity corresponding to the non-target cells can be calculated by using the Formula 2.

$$Q_0 = \frac{Q_1 - f_1(t_0)}{\sigma} \quad (\text{Formula 2})$$

Wherein, $Q_1$ is the nominal capacity corresponding to the non-target cells, $f_1(t_0)$ is the capacity decay value corresponding to the non-target cells at $t_0$, i.e., the aged capacity corresponding to the non-target cells, $f_1$ is the decay function of the non-target cells. In this way, the nominal capacity corresponding to the non-target cells can be calculated by using the capacity limitation relationship shown in Formula 2, wherein the calculated nominal capacity corresponding to the non-target cells and the nominal capacity corresponding to the target cells satisfy the capacity limitation relationship, i.e., the first nominal capacity and the second nominal capacity satisfy the capacity limitation relationship, therefore it can be guaranteed that the first cells and the second cells can reach the end of service life at the same time, which improves the utilization rate of cell energy.

In another application scenario, the capacity limitation relationship is:

the product of the nominal capacity corresponding to the target cells and the aging coefficient is equal to the difference between the nominal capacity corresponding to the non-target cells and the aged capacity corresponding to the non-target cells.

As an example, the capacity limitation relationship can be as shown in Formula 2. For example, $Q_1$ is 120Ah, $f_1(t_0)$ is 35Ah, $\sigma$ is 0.75, and $Q_0$ can be 113Ah.

In another application scenario, the manner in which the capacity limitation relationship is determined comprises:

determining target cells and non-target cells according to the first decay rate corresponding to the first cells and the second decay rate corresponding to the second cells, wherein the decay rate corresponding to the target cells is faster than the decay rate corresponding to the non-target cells;

determining an aging time based on the nominal capacity corresponding to the target cells, a preset aging coefficient and the decay rate corresponding to the target cells;

determining an aged capacity corresponding to the non-target cells according to the aging time and the decay rate corresponding to the non-target cells; and

determining the capacity limitation relationship based on the nominal capacity corresponding to the target cells, an initial SOC (English: State of Charge, Chinese: State of Charge) corresponding to the target cells, a nominal capacity corresponding to the non-target cells, the aged capacity corresponding to the non-target cells, an initial SOC corresponding to the non-target cells and the aging coefficient.

As an example, when determining the capacity limitation relationship, between the first decay rate corresponding to the first cells and the second decay rate corresponding to the second cells, the type of cells corresponding to the larger decay rate can be selected as target cells, and the other type of cells corresponding to the smaller decay rate are selected as non-target cells. Then, the aging time (i.e. the ending time point of service life of the target cells) can be obtained by Formula 1 based on the nominal capacity corresponding to the target cells, a preset aging coefficient, and the decay rate corresponding to the target cells.

Further, in order to ensure that the aging time of the target cells is the same as that of the non-target cells and that the aged capacity corresponding to the target cells is equal to that of the non-target cells when reaching the aging time, the aging time can be substituted into the relationship function of the decay rate corresponding to the non-target cells in relation to time, so as to obtain the aged capacity corresponding to the non-target cells, i.e., the capacity decay value of the cells at the end of its service life. Finally, the capacity limitation relationship can be obtained based on the nominal capacity corresponding to the target cells, an initial SOC corresponding to the target cells, a nominal capacity corresponding to the non-target cells, the aged capacity corresponding to the non-target cells, an initial SOC corresponding to the non-target cells and the aging coefficient, as shown in Formula 3.

$$Q_0 = \frac{(Q_1 - f_1(t_0)) \times \max(\frac{y_0}{x_0}, \frac{1-y_0}{1-x_0})}{\sigma} \quad (\text{Formula 3})$$

Wherein, $Q_0$ is the nominal capacity corresponding to the target cells, $Q_1$ is the nominal capacity corresponding to the non-target cells, $t_0$ is the aging time, $f_1(t_0)$ is the capacity decay value corresponding to the non-target cells at $t_0$, i.e., the aged capacity of the non-target cells, $x_0$ is the initial SOC corresponding to the target cells, $y_0$ is the initial SOC corresponding to the non-target cells, and $\sigma$ is the aging coefficient.

Specifically, for example, the first cells are LFP cells, the second cells are NMC cells, $Q_1$ is 100Ah, $f_1(t_0)$ is 30Ah, $x_0$ is 0.7, $y_0$ is 0.6, and $\sigma$ is 0.8, and $Q_0$ can be 117Ah. In general, the value of $x_0$ and $y_0$ should be the same or similar as far as possible in the actual module design in order to improve the utilization rate of cell energy.

In conclusion, the battery module in the present application comprises a first quantity of first cells and a second quantity of second cells, the first quantity of first cells and the second quantity of second cells are connected in series according to a preset arrangement sequence, wherein the first quantity of first cells and the second quantity of second cells connected in series are laid out according to a preset arrangement structure. Wherein, the thermal stability of the first cells is higher than that of the second cells. In the present application, the first cells and the second cells are connected in series according to the preset arrangement sequence and laid out according to the preset arrangement structure, so that the first cells with higher thermal stability can act as a thermal barrier, which improves the safety of the battery module and reduces unnecessary support structures in the battery module.

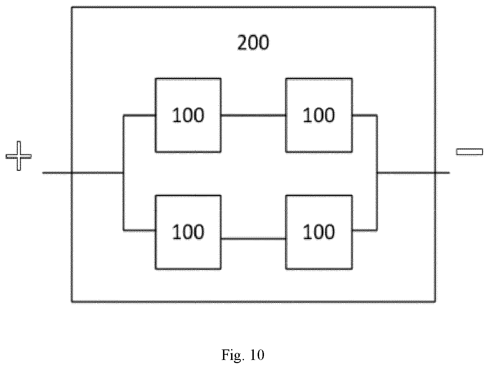

FIG. 10 is a schematic diagram of a battery pack 200 according to an exemplary embodiment, as shown in FIG. 10, the battery pack 200 comprises: one or more battery modules 100 according to the aforementioned embodiments.

Wherein each of the battery modules is connected in series or in parallel.

As an example, when the battery pack comprises multiple battery modules, the respective battery modules may be completely connected in series, or may be completely connected in parallel, or the respective battery modules may be partially connected in series and partially connected in parallel, which is not specifically restricted in the present application.

In conclusion, the battery module in the present application comprises a first quantity of first cells and a second quantity of second cells, wherein the first quantity of first cells and the second quantity of second cells are connected in series according to a preset arrangement sequence, and the first quantity of first cells and the second quantity of second cells connected in series are laid out according to a preset arrangement structure. Wherein, the thermal stability of the first cells is higher than that of the second cells. In the present application, the first cells and the second cells are connected in series according to the preset arrangement sequence and laid out according to the preset arrangement structure, so that the first cells with higher thermal stability can act as a thermal barrier, which improves the safety of the battery module and reduces unnecessary support structures in the battery module.

In the present application, unless otherwise clearly stated and defined, the terms "mounted", "coupled", "connected", "fixed", etc. are understood in a broad sense, for example, it may be a fixed connection, a detachable connection, or an integral connection; it may be a mechanical connection or an electrical connection; it may be directly connected, or indirectly connected through an intermediate medium; or it may be an internal communication between two elements or an interaction between two elements. The specific meanings of the above terms in the present application may be understood according to specific circumstances for a person skilled in the art.

In the present application, unless otherwise clearly stated and defined, the first feature being "above" or "below" the second feature may be that the first feature and the second feature are in direct contact, or they may be indirectly connected through an intermediate medium. Furthermore, the first feature being "above", "on" and "above" the second feature may mean that the first feature is directly or diagonally above the second feature, or simply means that the horizontal height of the first feature is higher than that of the second feature. The first feature is "below", "under" and "beneath" the second feature may mean that the first feature is directly below or diagonally below the second feature, or simply means that the horizontal height of the first feature is lower than that of the second feature.

In the description of the present specification, the description of the reference terms "an embodiment," "some embodiments," "examples," "specific examples," or "some examples" or the like means that specific features, structures, materials or characteristics described in conjunction with the embodiments or examples are included in at least one embodiment or example of the present application. In this specification, the schematic expressions of the above terms are not necessarily directed to the same embodiment or example. Furthermore, the specific features, structures, materials or characteristics described may be combined in a suitable manner in any one or more embodiments or examples. Furthermore, a person skilled in the art may combine and assemble different embodiments or examples and features of different embodiments or examples described in this specification unless they contradict each other.

Although the embodiments of the present application have been shown and described above, it will be appreciated by a person skilled in the art that changes, modifications, substitutions and variations may be made to the above-described embodiments, without departing from the broad general scope of the present application, and the above embodiments are, therefore, to be considered in all respects as illustrative and not restrictive to the present application.

## Claims

1. A battery module, **characterized in that**, the battery module comprises: a first quantity of first cells and a second quantity of second cells, wherein the thermal stability of the first cells is higher than that of the second cells; and

   the first quantity of first cells and the second quantity of second cells are connected in series according to a preset arrangement sequence, wherein the arrangement sequence is used to indicate the order of each of the first cells and each of the second cells in the battery module; and
   the first quantity of first cells and the second quantity of second cells connected in series are laid out according to a preset arrangement structure, wherein the arrangement structure is used to indicate the position of each of the first cells and each of the second cells in the battery module.

2. The battery module according to claim 1, **characterized in that**, the area and shape of a first target side of each of the first cells is the same as that of a second target side of each of the second cells; and
   the first cells and the second cells are connected in series in such a manner that the first target side is opposite to the second target side.

3. The battery module according to claim 1 or 2, **characterized in that**, the arrangement sequence is that the first cells and the second cells are arranged in an alternate manner; and
   the arrangement structure includes: a rectilinear structure or a matrix structure.

4. The battery module according to any one of claims 1 to 3, **characterized in that**, the first cells are lithium iron phosphate (LFP) cells, and the second cells are lithium nickel manganese cobalt oxide (NMC) cells.

5. The battery module according to any one of claims 1 to 4, **characterized in that**, a first nominal capacity corresponding to the first cells and a second nominal capacity corresponding to the second cells satisfy a preset capacity limitation relationship;
   wherein the capacity limitation relationship is determined based on a first decay rate corresponding to the first cells and a second decay rate corresponding to the second cells.

**6.** The battery module according to claim 5, **characterized in that**, the manner in which the capacity limitation relationship is determined comprises:

determining target cells and non-target cells according to the first decay rate corresponding to the first cells and the second decay rate corresponding to the second cells, wherein a decay rate corresponding to the target cells is faster than a decay rate corresponding to the non-target cells; and
determining an aging time according to a nominal capacity corresponding to the target cells, a preset aging coefficient and the decay rate corresponding to the target cells; and
determining an aged capacity corresponding to the non-target cells according to the aging time and the decay rate corresponding to the non-target cells; and
determining the capacity limitation relationship based on the nominal capacity corresponding to the target cells, a nominal capacity corresponding to the non-target cells, the aged capacity corresponding to the non-target cells and the aging coefficient.

**7.** The battery module according to claim 6, **characterized in that**, the capacity limitation relationship is:
the product of the nominal capacity corresponding to the target cells and the aging coefficient is equal to the difference between the nominal capacity corresponding to the non-target cells and the aged capacity corresponding to the non-target cells.

**8.** The battery module according to any one of claims 5 to 7, **characterized in that**, the manner in which the capacity limitation relationship is determined comprises:

determining target cells and non-target cells according to the first decay rate corresponding to the first cells and the second decay rate corresponding to the second cells, wherein a decay rate corresponding to the target cells is faster than a decay rate corresponding to the non-target cells; and
determining an aging time according to a nominal capacity corresponding to the target cells, a preset aging coefficient and the decay rate corresponding to the target cells; and
determining an aged capacity corresponding to the non-target cells according to the aging time and the decay rate corresponding to the non-target cells; and
determining the capacity limitation relationship based on the nominal capacity corresponding to the target cells, an initial SOC corresponding to the target cells, a nominal capacity corresponding to the non-target cells, the aged capacity corresponding to the non-target cells, an initial SOC corresponding to the non-target cells and the aging coefficient.

**9.** The battery module according to claim 8, **characterized in that**, the capacity limitation relationship is:

$$Q_0 = \frac{(Q_1 - f_1(t_0)) \times \max(\frac{y_0}{x_0}, \frac{1 - y_0}{1 - x_0})}{\sigma}$$

wherein, $Q_0$ is the nominal capacity corresponding to the target cells, $Q_1$ is the nominal capacity corresponding to the non-target cells, $t_0$ is the aging time, $f_1(t_0)$ is the aged capacity corresponding to the non-target cells, $x_0$ is the initial SOC corresponding to the target cells, $y_0$ is the initial SOC corresponding to the non-target cells, and $\sigma$ is the aging coefficient.

**10.** A battery pack, **characterized in that**, the battery pack comprises: one or more battery modules according to any one of claims 1 to 9;
wherein each of the battery modules is connected in series or in parallel.

100

Fig. 1

A

B

C

Fig. 2

+

−

Fig. 3

Fig. 4

Fig. 5

Fig. 6

Fig. 7

Fig. 8

Fig. 9

Fig. 10

## INTERNATIONAL SEARCH REPORT

| International application No. |
|---|
| **PCT/CN2022/083407** |

**A. CLASSIFICATION OF SUBJECT MATTER**

H01M 10/42(2006.01)i; H01M 10/658(2014.01)i; H01M 50/51(2021.01)i; H01M 50/258(2021.01)i; H01M 50/249(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, ENTXTC, CNKI, DWPI, ENTXT: 第1, 第一, 第2, 第二, 镍钴锰, 三元, NCM, NMC, 磷酸铁锂, LFP, 橄榄石, 热, 温度, 电池, 串联, 均衡, 容量, 衰减, 衰退, first, second, Nickel-cobalt-manganese, ternary, lithium iron phosphate, olivine, heat, temperature, battery, series, equalization, capacity, decay+, reduction

**C. DOCUMENTS CONSIDERED TO BE RELEVANT**

| Category* | Citation of document, with indication, where appropriate, of the relevant passages | Relevant to claim No. |
|---|---|---|
| X | CN 208674305 U (DONGGUAN TAFEL NEW ENERGY TECHNOLOGY CO., LTD. et al.) 29 March 2019 (2019-03-29) description, paragraphs 2-56, and figures 1-2 | 1-4, 10 |
| X | CN 107112603 A (TOSHIBA CORPORATION) 29 August 2017 (2017-08-29) description, paragraphs 10-421, and figures 1-9 | 1-4, 10 |
| X | CN 112599932 A (WEILAI AUTOMOBILE TECHNOLOGY (ANHUI) CO., LTD.) 02 April 2021 (2021-04-02) description, paragraphs 9-43, and figures 2-4 | 1-4, 10 |
| X | WO 2018135668 A1 (YAMAHA MOTOR CO., LTD.) 26 July 2018 (2018-07-26) description, paragraphs 8-170, and figures 1-10 | 1-4, 10 |
| Y | CN 208674305 U (DONGGUAN TAFEL NEW ENERGY TECHNOLOGY CO., LTD. et al.) 29 March 2019 (2019-03-29) description, paragraphs 2-56, and figures 1-2 | 5-10 |
| Y | CN 107112603 A (TOSHIBA CORPORATION) 29 August 2017 (2017-08-29) description, paragraphs 10-421, and figures 1-9 | 5-10 |

☑ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 June 2022** | **15 June 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/083407** |

**C.     DOCUMENTS CONSIDERED TO BE RELEVANT**

| Category* | Citation of document, with indication, where appropriate, of the relevant passages | Relevant to claim No. |
| --- | --- | --- |
| PX | CN 113036242 A (SVOLT ENERGY TECHNOLOGY CO., LTD.) 25 June 2021 (2021-06-25)<br>    description, paragraphs 3-59, and figures 1-10 | 1-10 |
| A | JP 2013089523 A (TDK CORPORATION) 13 May 2013 (2013-05-13)<br>    entire document | 1-10 |

Form PCT/ISA/210 (second sheet) (January 2015)

<table>
<tr><td colspan="2" align="center">**INTERNATIONAL SEARCH REPORT**<br>Information on patent family members</td><td colspan="2">International application No.<br><br>**PCT/CN2022/083407**</td></tr>
</table>

| Patent document cited in search report | | | Publication date (day/month/year) | Patent family member(s) | | | Publication date (day/month/year) |
|---|---|---|---|---|---|---|---|
| CN | 208674305 | U | 29 March 2019 | None | | | |
| CN | 107112603 | A | 29 August 2017 | JP | 6130053 | B1 | 17 May 2017 |
| | | | | US | 2017365886 | A1 | 21 December 2017 |
| | | | | WO | 2017046895 | A1 | 23 March 2017 |
| | | | | EP | 3352288 | A1 | 25 July 2018 |
| | | | | JP | WO2017046895 | X | 14 September 2017 |
| | | | | CN | 107112603 | B | 01 October 2019 |
| | | | | IN | 201717030363 | A | 01 December 2017 |
| | | | | EP | 3352288 | A4 | 30 January 2019 |
| | | | | EP | 3352288 | B1 | 26 February 2020 |
| | | | | US | 10673103 | B2 | 02 June 2020 |
| | | | | IN | 370422 | B | 02 July 2021 |
| CN | 112599932 | A | 02 April 2021 | None | | | |
| WO | 2018135668 | A1 | 26 July 2018 | JP | WO2018135668 | A1 | 27 June 2019 |
| CN | 113036242 | A | 25 June 2021 | CN | 113036242 | B | 24 September 2021 |
| JP | 2013089523 | A | 13 May 2013 | JP | 6047871 | B2 | 21 December 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110593168